(19) Europäisches Patentamt / European Patent Office / Office européen des brevets

(11) **EP 4 524 805 A1**

(12) **EUROPÄISCHE PATENTANMELDUNG**

(43) Veröffentlichungstag:
**19.03.2025 Patentblatt 2025/12**

(21) Anmeldenummer: 24184289.7

(22) Anmeldetag: **25.06.2024**

(51) Internationale Patentklassifikation (IPC):
**G06F 30/15** (2020.01)   **G06F 30/20** (2020.01)
**G06F 30/23** (2020.01)

(52) Gemeinsame Patentklassifikation (CPC):
**G06F 30/15; G06F 30/23;** G06F 2119/14

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **14.09.2023 DE 102023124882**

(71) Anmelder: **ArianeGroup GmbH**
**82024 Taufkirchen (DE)**

(72) Erfinder:
• **Meitzner, Robert**
  **28199 Bremen (DE)**
• **Ramanolla, Vasu**
  **28199 Bremen (DE)**
• **Vorel, Dr. Michael**
  **28199 Bremen (DE)**

(74) Vertreter: **Marschall, Stefan**
**Elbpatent**
**Marschall & Partner**
**Patent und Rechtsanwaltskanzlei mbB**
**Bavariaring 26**
**80336 München (DE)**

(54) **SIMULATIONS-, EVALUIERUNGS- UND HERSTELLUNGSVERFAHREN FÜR EINE STRUKTUR EINES LUFT- ODER RAUMFAHRZEUGS SOWIE MODIFIKATIONSVERFAHREN FÜR EIN LUFT- ODER RAUMFAHRZEUG**

(57)    Offenbart ist ein Verfahren zum Simulieren von Belastungen, denen mindestens eine Komponente E100, E200, E300, E400, E100', E200', E300', E400', E500' einer Struktur E, E' eines Luft- oder Raumfahrzeugs in dessen Betrieb ausgesetzt ist. Das Verfahren umfasst ein Durchführen einer statischen Analyse der Struktur durch Anwenden einer die Struktur E, E' repräsentierenden FE-Methode. Dabei werden QSL-Vektoren berücksichtigt, die aus Eigenmoden der mindestens einen Komponente E, E' berechnet werden.

Zudem offenbart sind ein Verfahren zum Evaluieren und ein Verfahren zum Herstellen jeweils einer mindestens eine Komponente E100, E200, E300, E400, E100', E200', E300', E400', E500' umfassenden Struktur E, E' eines Luft- oder Raumfahrzeugs. Weiterhin offenbart ist ein Verfahren zum Modifizieren eines Luft- oder Raumfahrzeugs, das eine mindestens eine Komponente E100, E200, E300, E400, E100', E200', E300', E400', E500' umfassenden Struktur E, E' aufweist.

**Fig. 2c:**

EP 4 524 805 A1

**Beschreibung**

Die vorliegende Erfindung betrifft ein Verfahren zum Simulieren von mechanischen Belastungen, denen mindestens eine Komponente einer Struktur eines Luft- oder Raumfahrzeugs im Betrieb ausgesetzt ist sowie ein Verfahren zum Evaluieren einer solchen Struktur. Darüber hinaus hat die Erfindung ein Verfahren zum Herstellen einer Struktur eines Luft- oder Raumfahrzeugs sowie ein Verfahren zum Modifizieren eines Luft- oder Raumfahrzeugs zum Gegenstand.

Luft- und Raumfahrzeuge umfassen üblicherweise Strukturen, die aus einer oder mehreren Komponenten zusammengesetzt sind. Die Strukturen, insbesondere die Komponenten und jeweilige Schnittstellen müssen dabei dazu ausgelegt sein, im Betrieb des Luft- bzw. Raumfahrzeugs statischen und/oder dynamischen Lasten standzuhalten.

Um die Struktur in diesem Sinne geeignet zu konstruieren und/oder um eine bestehende Struktur entsprechend zu beurteilen, werden vielfach Finite-Elemente-Modelle verwendet, mit denen die statischen Lasten simuliert und dann evaluiert werden können.

Für die Betrachtung dynamischer Lasten in statischen Berechnungen ist die Bestimmung von Quasi-Statischen-Lastvektoren (kurz "QSL-Vektoren") bekannt, die auf die jeweiligen Komponenten wirkende Trägheitsbeschleunigungen repräsentieren. Üblicherweise werden die QSL-Vektoren als gleichmäßig auf einer Sphäre verteilt definiert. Bei einer solchen Herangehensweise werden Auswirkungen spezifischer Schwingungscharakteristiken jedoch vernachlässigt.

Der vorliegenden Erfindung liegt die Aufgabe zugrunde, eine Technik bereitzustellen, mit der Schwächen bzw. Nachteile von Strukturen eines Luft- oder Raumfahrzeugs erkannt und/oder sogar vermieden werden können. Weiterhin zielt die Erfindung darauf ab, in vorteilhafter Weise eine Bereitstellung verbesserter Luft- und/oder Raumfahrzeuge zu ermöglichen.

Die Aufgaben werden gelöst durch die Verfahren nach den Ansprüchen 1, 6, 7 und 8. Vorteilhafte Ausführungsformen sind in den Unteransprüchen, der Beschreibung und den Figuren offenbart.

Ein erstes erfindungsgemäßes Verfahren dient einem Simulieren von (insbesondere mechanischen) Belastungen, denen mindestens eine Komponente einer (insbesondere realen oder erst konzipierten) Struktur eines Luft- oder Raumfahrzeugs im Betrieb ausgesetzt ist. Die Struktur kann dabei (bereits) real/körperlich existieren oder erst durch ein Konstruktionsmodell definiert sein.

Das Verfahren umfasst ein Durchführen einer statischen Analyse der Struktur durch Anwenden einer (computerimplementierten) Finite-Elemente-Methode - im Folgenden auch als "FE-Methode abgekürzt - welche die Struktur repräsentiert, insbesondere ein geometrisches Modell der Struktur umfasst und auf die mindestens eine Komponente wirkende statische Lasten modelliert. Dabei werden erfindungsgemäß beim Anwenden der FE-Methode QSL-Vektoren berücksichtigt, die aus Eigenmoden der mindestens einen Komponente berechnet werden. Insbesondere kann das Verfahren bei einem Herstellen der Struktur und/oder einem Modifizieren des Luft- oder Raumfahrzeugs ausgeführt werden bzw. diesem Herstellen und/oder Modifizieren dienen.

Insbesondere reflektiert jeder der QSL-Vektoren für eine ihm zugehörige Komponente der Struktur und eine ihm zugehörige Eigenmode vorteilhaft eine dynamische Antwort bzw. aus Trägheitsbeschleunigungen resultierende Belastungen.

Damit können dezidierte Schwingungsformen, insbesondere Vibrationen der mindestens einen Komponente, im Falle mehrerer Komponenten auch deren Bewegungen bzw. Lasten relativ zueinander vorteilhaft in die statische Analyse einbezogen werden. Dies ermöglicht eine besonders realistische Simulation unter Vermeidung einer rechenaufwendigen dynamischen Analyse. Mittels aus der Simulation gewonnener Ergebnisdaten können bestehende Strukturen verbessert und/oder verbesserte Strukturen hergestellt, insbesondere Luft- und/oder Raumfahrzeuge optimiert werden.

Zur aussagekräftigeren Abgrenzung von den nachfolgend beschriebenen zweiten bis vierten erfindungsgemäßen Verfahren wird das erste erfindungsgemäße Verfahren in dieser Schrift auch als "erfindungsgemäßes Simulationsverfahren" bezeichnet.

Ein zweites erfindungsgemäßes Verfahren dient einem Evaluieren einer mindestens eine Komponente umfassenden Struktur eines Luft- oder Raumfahrzeugs. Die Struktur kann dabei (bereits) real/körperlich existieren oder erst durch ein Konstruktionsmodell definiert sein.

Das zweite erfindungsgemäße Verfahren umfasst ein Simulieren von Belastungen, denen die Struktur im Betrieb des Luft- oder Raumfahrzeugs ausgesetzt ist, mittels eines erfindungsgemäßen Simulationsverfahrens. Darüber hinaus umfasst das zweite erfindungsgemäße Verfahren ein Auswerten eines Ergebnisses der Anwendung der FE-Methode, insbesondere ein Auswerten simulierter Belastungsdaten.

Beispielsweise kann mittels eines solchen Auswertens die Struktur bzw. ihre Eignung zur Verwendung als Teil des Luft- oder Raumfahrzeugs beurteilt werden, und/oder es können mittels des Auswertens Einbau- und/oder Einsatzbedingungen der Struktur bestimmt werden. Beispiele für derartige Einbau- und/oder Einsatzbedingungen sind insbesondere vorteilhaft oder zwingend zu berücksichtigende Maßgaben bei einer Fixierung der Struktur im Luft- oder Raumfahrzeug und/oder bei einer Kombination der Struktur mit einer anderen Struktur und/oder beim Betrieb des Luft- oder Raumfahrzeugs.

Das Auswerten kann vorteilhaft mindestens teilweise automatisiert, insbesondere durch eine Software erfolgen. Vorzugsweise umfasst das zweite erfindungsgemäße Verfahren eine Ausgabe eines Evaluierungsergebnisses an einer Anzeigevorrichtung.

Zur aussagekräftigeren Abgrenzung vom oben genannten ersten erfindungsgemäßen Verfahren (dem erfindungsgemäßen Simulationsverfahren) und den nachfolgend beschriebenen dritten und vierten erfindungsgemäßen Verfahren wird das zweite erfindungsgemäße Verfahren in dieser Schrift auch als "erfindungsgemäßes Evaluierungsverfahren" bezeichnet.

Ein drittes erfindungsgemäßes Verfahren dient einem Herstellen einer eine oder mehrere Komponenten umfassenden Struktur eines Luft- oder Raumfahrzeugs. Die Struktur ist dabei zunächst in einem Konstruktionsmodell definiert. Das Verfahren umfasst ein Simulieren von Belastungen, denen diese Struktur im Betrieb des Luft- oder Raumfahrzeugs ausgesetzt ist (bzw. wäre); das Simulieren umfasst dabei ein Ausführen eines erfindungsgemäßen Simulationsverfahrens. Auf Grundlage eines Ergebnisses der angewandten FE-Methode wird beim dritten erfindungsgemäßen Verfahren ferner (vorzugsweise mindestens teilweise automatisch) eine Eignung der gemäß dem Konstruktionsmodell ausgebildeten Struktur zur Integration in das Luft- und Raumfahrzeug festgestellt.

Da eine solche Feststellung eine Auswertung impliziert, umfasst das dritte erfindungsgemäße Verfahren somit insbesondere sogar ein Durchführen eines erfindungsgemäßen Evaluierungsverfahrens. Mit ihm können mit geringem Aufwand besonders vorteilhafte bzw. optimierter Strukturen und damit auch Luft- und Raumfahrzeuge bereitgestellt werden.

Beim besagten Feststellen der Eignung kann beispielsweise bestimmt werden, dass die gemäß dem Konstruktionsmodell ausgebildete Struktur vorbestimmte Kriterien bzw. Anforderungen erfüllt. Alternativ oder zusätzlich kann dabei bestimmt werden, dass die Struktur vorteilhaft gegenüber einer anderen mindestens eine Komponente umfassenden Struktur (beispielsweise anderer Bauart) ist; die andere Struktur kann dabei ebenfalls zunächst in einem zugehörigen (ggf. vom oben genannten Konstruktionsmodell abweichenden) Konstruktionsmodell definiert sein. Insbesondere kann das dritte erfindungsgemäße Verfahren auch ein Anwenden eines erfindungsgemäßen Simulationsverfahrens zum Simulieren von Belastungen umfassen, denen die andere Struktur im Betrieb des Luft- oder Raumfahrzeugs ausgesetzt ist, vorzugsweise dann auch ein Vergleichen der so jeweils erhaltenen Simulationsergebnisse.

Zur aussagekräftigeren Abgrenzung von den oben genannten ersten und zweiten erfindungsgemäßen Verfahren (dem erfindungsgemäßen Simulationsverfahren und dem erfindungsgemäßen Evaluierungsverfahren) und dem nachfolgend beschriebenen vierten erfindungsgemäßen Verfahren wird das dritte erfindungsgemäße Verfahren in dieser Schrift auch als "erfindungsgemäßes Herstellungsverfahren" bezeichnet.

Ein viertes erfindungsgemäßes Verfahren dient einem Modifizieren eines Luft- oder Raumfahrzeugs. Das Verfahren umfasst ein Simulieren von Belastungen, denen eine mindestens eine Komponente umfassende Struktur im Betrieb des Luft- oder Raumfahrzeugs ausgesetzt ist, mittels eines erfindungsgemäßen Simulationsverfahrens. Auf Grundlage eines Ergebnisses der angewandten FE-Methode wird dann die Struktur durch eine andere Struktur ersetzt. Insbesondere kann das vierte erfindungsgemäße Verfahren sogar ein Ausführen eines erfindungsgemäßen Evaluierungsverfahrens umfassen.

Die andere Struktur kann gleicher Bauart sein wie die erstgenannte Struktur; dies kann beispielsweise sinnvoll sein, wenn sich aus dem Ergebnis der angewandten FE-Methode Auswirkungen von Ermüdungs- und/oder Abnutzungserscheinungen der erstgenannten Struktur ergeben und/oder wenn anhand des Ergebnisses festgestellt wird, dass die erstgenannte Struktur vorgegebenen (ggf. gegenüber früheren Anforderungen geänderten) Belastungsanforderungen im Betrieb des Luft- oder Raumfahrzeugs nicht (ggf. nicht mehr) gerecht wird.

Alternativ kann die andere Struktur anderer Bauart als die erstgenannte Struktur sein, also gemäß einem anderen Konstruktionsprinzip ausgebildet. Dabei kann beispielsweise die mindestens eine Komponente andere (beispielsweise geometrische) Eigenschaften ausbilden und/oder an einer anderen Stelle positioniert sein als bei der erstgenannten Struktur.

Das vierte erfindungsgemäße Verfahren kann bei derartigen Ausbildungsformen ein mittels eines erfindungsgemäßen Simulationsverfahrens ausgeführtes Simulieren auch von Belastungen umfassen, denen die andere Struktur im Betrieb des Luft- oder Raumfahrzeugs ausgesetzt ist. Ein damit erhaltenes Simulationsergebnis kann dann mit einem aus der Anwendung des Simulationsverfahrens auf die erstgenannte Struktur erhaltenen Ergebnis verglichen werden. Dabei kann insbesondere festgestellt werden, dass die andere Struktur mindestens einen Vorteil gegenüber der erstgenannten Struktur aufweist. Das Ersetzen der Struktur kann in derartigen Fällen vorzugsweise insbesondere auf Grundlage des Vergleichs erfolgen.

Zur Abgrenzung von den oben genannten erfindungsgemäßen Simulations-, Evaluierungs- und Herstellungsverfahren wird das vierte erfindungsgemäße Verfahren nachfolgend auch als "erfindungsgemäßes Modifikationsverfahren" bezeichnet.

Die Struktur kann bei den erfindungsgemäßen (ersten, zweiten, dritten und vierten) Verfahren jeweils beispielsweise eine Primärstruktur, eine Sekundärstruktur umfassen, speziell mindestens einen Tank, mindestens ein Triebwerk, mindestens eine Vorrichtung zur Fluidsteuerung und/oder mindestens ein Elektrogerät.

Gemäß vorteilhaften Ausführungsformen umfasst das Berechnen der QSL-Vektoren beim erfindungsgemäßen Simulationsverfahren ein Bestimmen von modalen Massen und/oder von Beteiligungsfaktoren jeweils aus einer zugehörigen der Eigenmoden und einem zugehörigen Starrkörper-Eigenvektor der mindestens einen Komponente (entsprechend Freiheitsgraden der FE-Methode, insbesondere in eine Verschiebungsrichtung). Insbesondere kann beim Berechnen der QSL-Vektoren eine Modalanalyse durchgeführt werden.

Im Falle, dass die Struktur mehrere Komponenten umfasst, können aus jeweiligen modalen Massen bzw. Beteiligungsfaktoren berechnete Vektoren zum Berechnen der QSL-Vektoren komponentenabhängig gewichtet und/oder durch den Faktor 0 ausgeblendet werden. Damit kann den verschiedenen Komponenten bei der Durchführung der FE-Methode voneinander verschiedene Bedeutung beigemessen werden. Die jeweiligen Gewichtungen können dabei vorzugsweise unabhängig von der Richtung des Eigenvektors der zugehörigen Eigenmode und von der zugehörigen Eigenfrequenz sein.

In vorteilhaften Ausführungsformen umfasst das erfindungsgemäße Simulationsverfahren ein Auswählen der in der FE-Methode zu berücksichtigenden QSL-Vektoren aus einer Mehrzahl von aus Eigenmoden der mindestens einen Komponente berechneten QSL-Vektoren.

Das Auswählen kann dabei so erfolgen, dass QSL-Vektoren mit den größten auftretenden euklidischen Längen (bzw. Vektoramplituden) in einer vorbestimmten Anzahl ausgewählt werden; die Länge jedes ausgewählten QSL-Vektors ist dann also mindestens so groß wie die Länge jedes nicht ausgewählten QSL-Vektors.

Alternativ oder zusätzlich können QSL-Vektoren mit den größten auftretenden euklidischen Längen in einer Anzahl ausgewählt werden, für die die Summe ihrer euklidischen Längen (Vektoramplituden) einen vorbestimmten Schwellwert eben überschreitet; die Auswahl ist also die (bezüglich der Anzahl ihrer Elemente) kleinste Menge an QSL-Vektoren mit diesen Eigenschaften; mit dem ersten Feststellen eines solchen Überschreiten werden also keine weiteren QSL-Vektoren zur Auswahl hinzugefügt.

Auf diese Weisen kann ein bei der Anwendung der FE-Methode erforderlicher Rechenaufwand durch Einschränkung auf besonders relevante QSL-Vektoren begrenzt werden.

Zu jedem beim Anwenden der FE-Methode berücksichtigten QSL-Vektor wird beim Anwenden der FE-Methode vorzugsweise auch ein ihm entgegengesetzter Vektor gleicher Länge berücksichtigt. So kann der alternierende Charakter der Schwingungsamplituden dargestellt werden.

Vorzugsweise wird ein Ergebnis der FE-Methode numerisch oder visualisiert (graphisch aufgearbeitet) an einer Anzeigevorrichtung, beispielsweise einem Computerbildschirm ausgegeben. So kann ein Anwender die durch die Ausgabe repräsentierten Belastungen, die aus dem Betrieb des Luft- oder Raumfahrzeugs resultieren, direkt erkennen.

**Beispiel:**

Insbesondere kann das Berechnen der QSL-Vektoren bei einem erfindungsgemäßen Simulationsverfahren einen, mehrere oder alle Einzelschritte des nachfolgend präzisierten Beispiels umfassen.

Für jede Komponente c wird dabei zur Bestimmung von Eigenmoden mit entsprechenden Eigenfrequenzen und Eigenvektoren mindestens eine Modalanalyse durchgeführt. Zusätzlich werden für jeden Eigenvektor $\{U_i\}$ Beteiligungsfaktoren $p_{ij} = \{U_i\}^T [M] \{R_j\}$ berechnet, wobei $[M]$ eine Massenmatrix bezeichnet und $\{R_j\}$ Starrkörper-Eigenvektoren in Verschiebungsrichtungen (j = 1, 2, 3) und Drehrichtungen sind (entsprechend Freiheitsgraden in der Finite-Elemente-Analyse).

Effektive Modalmassen ergeben sich so als $m_{ij} = p_{ij}^2$ , die effektive modale Gesamtmasse für jede Richtung ist $\Sigma_i\, m_{ij}$.

Zur Berechnung der QSL-Vektoren werden die Beteiligungsfaktoren $p_{ijC}$ und effektiven Modalmassen $m_{ijC}$ für jede Eigenmode i, jede Richtung j und jede Komponente c bestimmt. Zur Definition der QSL-Vektoren werden die Beteiligungsfaktoren zu den Verschiebungen und zugehörige effektive modale Massen verwendet; Beteiligungsfaktoren in Rotationsrichtungen und die zugehörigen effektiven modalen Massen werden typischerweise nicht berücksichtigt.

Für jede Eigenmode i und jede Komponente c werden die Vektoren $\{N_{ic}\}$ mit den Vektorkomponenten $n_{ijc}$ durch die Formel

$$n_{ijc} = \frac{\sum_j m_{ijc}}{\max\limits_i \sum_j m_{ijc}} \frac{p_{ijc}}{\|\{P_{ic}\}\|}$$

bestimmt. QSL-Vektoren werden durch

$$\{V_{ic}\} = L_c \{N_{ic}\}$$

definiert, wobei $L_c$ jeweilige QSL-Beschleunigungen der einzelnen Komponenten c sind; diese vorzugsweise vorbestimmten QSL-Beschleunigungen werden als unabhängig von Richtung und Frequenz angesehen, sofern erforderlich können jedoch derartige Abhängigkeiten aufgenommen werden.

Zur Auswahl der relevantesten Eigenmoden und zugehöriger QSL-Vektoren können folgende Kriterien jeweils für jede Komponente c angewandt werden:

1. Auswahl einer festen Anzahl $n_{criteria}$ an Eigenmoden, für die die euklidische Länge (Vektoramplitude) der Vektoren $\{N_{ic}\}$ am größten ist;

2. Auswahl von Eigenmoden, für die die euklidische Länge (bzw. die dimensionslose Vektoramplitude) der Vektoren $\{N_{ic}\}$ am größten ist, bis der Bruch $\dfrac{\sum_{ausgewählte\ i}\|\{N_{ic}\}\|}{\sum_i\|\{N_{ic}\}\|}$ den Schwellwert $m_{criteria}$ überschreitet.

Die Gesamtauswahl an den relevantesten Eigenmoden besteht aus der Kombination von zu den einzelnen Komponenten gehörigen Auswahlen.

Die ausgewählten QSL-Vektoren $\{V_{ic}\}$ definieren die Vektoramplitude und Richtung/ Orientierung, in der die Trägheitsbeschleunigungen für jede ausgewählte Eigenmode und Komponente in der statischen Analyse zu berücksichtigen sind.

Für alle Komponenten c werden zu jeder ausgewählten Eigenmode zugehörige statische Belastungszustände bestehend aus QSL-Vektoren $\{V_{ic}\}$ definiert.

Um den alternierenden Charakter von Schwingungsamplituden darzustellen, werden mit den QSL-Vektoren $\{V_{ic}\}$ jeweils auch die Vektoren $-\{V_{ic}\}$ berücksichtigt.

Abhängig von der jeweils verwendeten Finite-Elemente-Analysesoftware werden jeweils passende Eingabedateien, die die genannten Definitionen von Belastungsfällen umfassen, erstellt.

Im Folgenden wird die vorliegende Erfindung anhand von Zeichnungen näher erläutert.

Es zeigen:

Figur 1: ein Ablaufdiagramm für eine exemplarische Ausführungsform eines erfindungsgemäßen Simulationsverfahrens;

Figur 2a: eine Struktur eines Raumfahrzeugs in einem ersten Anwendungsbeispiel eines erfindungsgemäßen Simulationsverfahrens;

Figur 2b: eine Visualisierung von Vektorlängen der im ersten Anwendungsbeispiel berücksichtigten QSL-Vektoren;

Figur 2c.: Visualisierungen von im ersten Anwendungsbeispiel für verschiedene Betriebszustände erhaltenen Ergebnissen;

Figur 3a: eine Struktur eines Raumfahrzeugs in einem zweiten Anwendungsbeispiel eines erfindungsgemäßen Simulationsverfahrens;

Figur 3b: eine Visualisierung von Vektorlängen der im zweiten Anwendungsbeispiel berücksichtigten QSL-Vektoren; und

Figur 3c: Visualisierungen von im zweiten Anwendungsbeispiel für verschiedene Betriebszustände erhaltenen Ergebnissen.

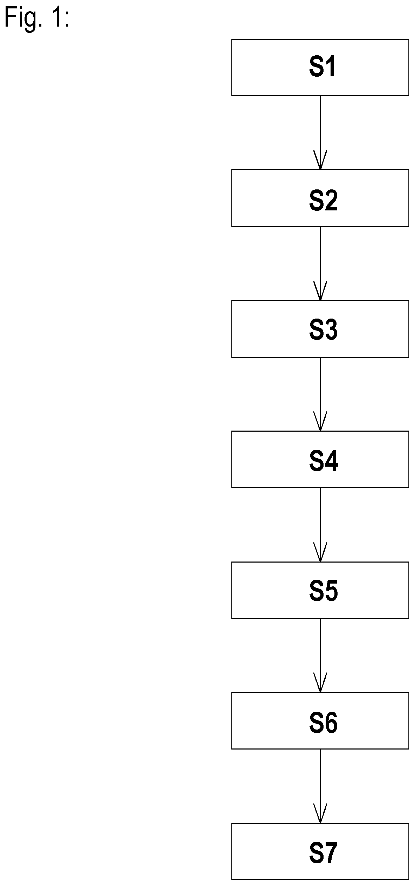

Die Figur 1 zeigt ein Ablaufdiagramm eines erfindungsgemäßen Simulationsverfahrens, mit dem Belastungen, denen mindestens eine Komponente einer Struktur eines Luft- oder Raumfahrzeugs in dessen Betrieb ausgesetzt ist, simuliert werden.

In einem Schritt S1 wird dabei eine (computerimplementierte) Finite-Elemente-Methode festgelegt, die ein Modell enthält, das zu jeder Komponente der Struktur zugehörige Knotenpunkte umfasst, und die auf die mindestens eine Komponente wirkende statische Lasten modelliert.

In einem Schritt S2 werden mittels einer Modalanalyse zu jeder Komponente bzw. ihren Knotenpunkten zugehörige Eigenmoden berechnet.

In einem Schritt S3 werden für jede der Komponenten aus jeder Eigenmode und jedem translatorischen Starrkörper-Eigenvektor zugehörige modale Massen und/oder Beteiligungsfaktoren bestimmt.

In einem Schritt S4 werden für jede der Komponenten zu jeder ihrer Eigenmoden aus den bestimmten modalen Massen bzw.

Beteiligungsfaktoren sowie aus komponentenabhängigen Gewichtungen ein QSL-Vektor bestimmt, z.B. gemäß der oben genannten Formel.

In einem Schritt S5 wird aus den so für alle Komponenten bestimmten QSL-Vektoren eine Menge an relevantesten QSL-Vektoren ausgewählt, z.B. anhand des oben genannten Parameters $n_{criteria}$.

In einem Schritt S6 werden die ausgewählten QSL-Vektoren und die jeweils dazu gehörigen in entgegengesetzte Richtung weisenden Vektoren gleicher Länge in eine Eingabedatei bzw. einen Präprozessor für die festgelegte FE-Methode integriert.

In einem Schritt S7 erfolgt eine statische Analyse der Struktur durch Anwenden der festgelegten FE-Methode unter Berücksichtigung der Eingabedatei und damit der ausgewählten QSL-Vektoren und der jeweils in entgegengesetzt Richtung weisenden Vektoren gleicher Länge.

Das Simulationsverfahren kann insbesondere vorteilhaft in ein Evaluierungsverfahren zum Beurteilen der Struktur, in einen Herstellungsprozess für die Struktur oder in ein Verfahren integriert werden, das einem Modifizieren des Luft- oder Raumfahrzeugs dient.

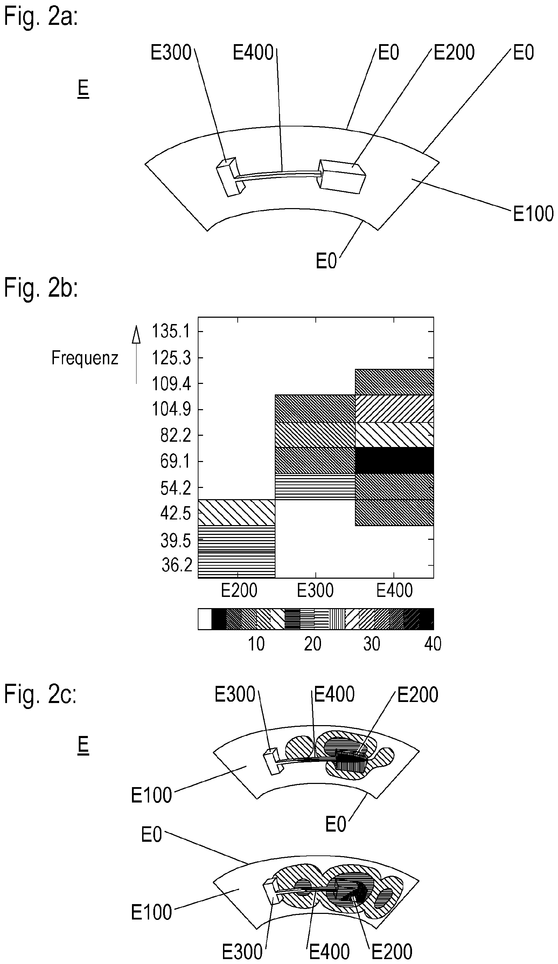

Die Figuren 2a - 2c illustrieren die Anwendung eines exemplarischen Simulationsverfahrens gemäß der vorliegenden Erfindung auf eine Struktur E eines Luft- oder Raumfahrzeugs. Die Struktur weist Ränder E0 sowie als Komponenten einen Gehäuseabschnitt E100, Elemente E200, E300 und eine die Elemente E200 und E300 miteinander verbindende Leitung E400 auf. Für die Ränder E0 und den Gehäuseabschnitt E100 werden beim dargestellten Ausführungsbeispiel keine QSL-Vektoren bestimmt, wohl aber für die Komponenten E200, E300, E400.

Hierbei verwendete Parameter ergeben sich aus der Tabelle 1.

Tabelle 1:

| Komponente | $L_c$ | $n_{criteria}$ | $m_{criteria}$ |
|---|---|---|---|
| E0 | 0 | - | - |
| E100 | 0 | - | - |
| E200 | 20 | 3 | 60 |
| E300 | 20 | 3 | 60 |
| E400 | 40 | 2 | 0 |
|  | g |  | % |

Die Figur 2b illustriert die jeweiligen euklidischen Längen der für die verschiedenen Komponenten und zugehörigen Eigenmoden bestimmten QSL-Vektoren.

Die ausgewählten QSL-Vektoren ergeben sich aus der Tabelle 2, in der auch Eigenschaften der QSL-Vektoren angegeben sind.

**Tabelle 2:**

| Komponente | mode | freq | mass | mass total | accel dof 1 | accel dof 2 | accel dof 3 | accel dof 1 2 3 | $n_{criteria}$ | $m_{criteria}$ |
|---|---|---|---|---|---|---|---|---|---|---|
| E200 | 1 | 36.2 | 142 | 397 | 0.5 | -7.6 | 15.8 | 17.5 | 3 |  |
| E200 | 2 | 39.5 | 162 | 397 | 1.8 | -17.1 | -10.2 | 20 | 3 | 60 |
| E200 | 3 | 42.5 | 72 | 397 | -8.8 | 1.2 | -0.3 | 8.9 | 3 |  |
| E300 | 4 | 54.2 | 44 | 92 | 3.9 | 13.3 | 14.5 | 20 | 3 | 60 |
| E300 | 5 | 69.1 | 13 | 92 | -2 | 5 | -2.5 | 6 | 3 |  |
| E300 | 6 | 82.2 | 19 | 92 | 4.8 | 4.2 | -6 | 8.8 | 3 |  |
| E400 | 5 | 69.1 | 5 | 13 | -3.2 | 18.8 | -35.2 | 40 | 2 |  |
| E400 | 7 | 104.9 | 5 | 13 | -3.1 | 24.8 | 29 | 38.3 | 2 |  |
|  |  | Hz | kg | kg | g | g | g | g |  | % |

Mittels einer Eingabedatei, die die Werte gemäß der Tabelle 3 enthält, werden die ausgewählten QSL-Vektoren der FE-Methode zugeführt und damit von dieser beim Durchführen einer statischen Analyse der Struktur berücksichtigt.

**Tabelle 3:** Eingabedatei

```
* * * * * * * * * * * * * * * * * * * * * * * * * * * * * * * * * * *
*STEP
* * * * * * * * * * * * * * * * * * * * * * * * * * * * * * * * * * * *
*STATIC

* * * * * * * * * * * * * * * * * * * * * * * * * * * * * * * * * *
*DLOAD
E200,GRAV,18.775,0.009132,2.2194,9.5556
E300,GRAV,0.0079558,0.80147,9.3369,2.901
E400,GRAV,1.4437,0.014094,0.54408,9.7949
* * * * * * * * * * * * * * * * * * * * * * * * * * * * * * * * * *
*END STEP
* * * * * * * * * * * * * * * * * * * * * * * * * * * * * * * * * *
```

Die Figur 2c zeigt exemplarisch zwei visualisierte Ergebnisse der statischen Analyse bei den Frequenzen 36Hz bzw. 40Hz.

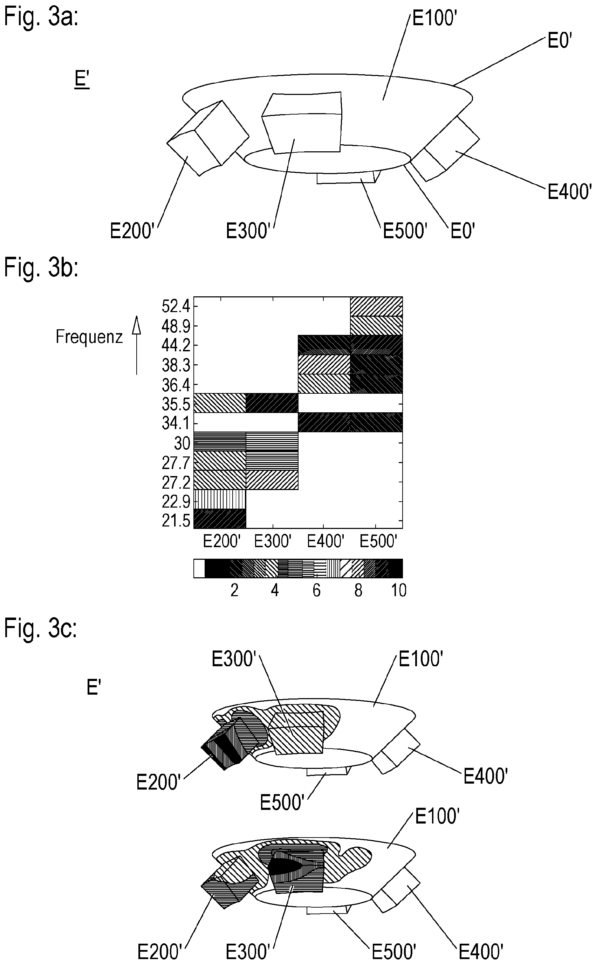

Die Figuren 3a - 3c illustrieren die Anwendung eines exemplarischen Simulationsverfahrens gemäß der vorliegenden Erfindung auf eine alternative Struktur E' eines Luft- oder Raumfahrzeugs, die Ränder E0' und als Komponenten einen Gehäuseabschnitt E100' sowie Elemente E200', E300', E400' und E500' aufweist. Für die Ränder E0' und den Gehäuseabschnitt E100' werden beim dargestellten Ausführungsbeispiel vorliegend wiederum keine QSL-Vektoren bestimmt, wohl aber für die Komponenten E200', E300', E400', E500'.

Hierbei als (mathematische) Gewichtung verwendete QSL-Beschleunigungen und für die Auswahl verwendete Parameter ergeben sich aus der Tabelle 4.

**Tabelle 4:**

| set | $L_c$ | $n_{criteria}$ | $m_{criteria}$ |
|-----|-------|----------------|----------------|
| E0' | 0 | - | |
| E100' | 0 | - | |
| E200' | 10 | 3 | 50 |
| E300' | 10 | 3 | 50 |
| E400' | 10 | 3 | 50 |
| E500' | 10 | 3 | 50 |
| | g | | % |

Die Figur 3b illustriert die jeweiligen euklidischen Längen der für die verschiedenen Komponenten und zugehörigen Eigenmoden bestimmten QSL-Vektoren.

Die ausgewählten QSL-Vektoren ergeben sich aus der Tabelle 5, in der auch Eigenschaften der QSL-Vektoren angegeben sind.

**Tabelle 5:**

| set | mode | freq | mass | mass total | accel dof 1 | accel dof 2 | accel dof 3 | accel dof 1 2 3 | selection $n_{criteria}$ | selection $m_{criteria}$ |
|-----|------|------|------|------------|-------------|-------------|-------------|------------------|--------------------------|--------------------------|
| E200' | 1 | 21.5 | 1255 | 3840 | -5 | -1.6 | 8 | 10 | 3 | 50 |
| E200' | 2 | 22.9 | 789 | 3840 | -1.9 | 6 | 0 | 6.3 | 3 | |

(fortgesetzt)

| set | mode | freq | mass | mass total | accel dof 1 | accel dof 2 | acc el dof 3 | accel dof 1 2 3 | selection $n_{criteria}$ | selection $m_{criteria}$ |
|---|---|---|---|---|---|---|---|---|---|---|
| E200' | 5 | 30 | 531 | 3840 | 3.1 | 1.1 | 2 | 4.2 | 3 | |
| E300' | 3 | 27.2 | 774 | 2912 | 2.4 | 1.1 | - | 7.9 | 3 | |
| E300' | 4 | 27.7 | 538 | 2912 | -2.6 | 3.8 | - | 5.5 | 3 | |
| E300' | 7 | 35.5 | 984 | 2912 | -1.1 | -8.4 | - | 10 | 3 | 50 |
| E400' | 6 | 34.1 | 841 | 2049 | 2.3 | 0 | - | 10 | 3 | 50 |
| E400' | 8 | 36.4 | 294 | 2049 | 1.4 | -3 | 1 | 3.5 | 3 | |
| E400' | 9 | 38.3 | 699 | 2049 | 7.6 | 3.3 | 0 | 8.3 | 3 | |
| E500' | 10 | 44.2 | 532 | 1269 | -2.7 | -3.7 | 8 | 10 | 3 | 50 |
| E500' | 11 | 48.9 | 134 | 1269 | -2.2 | 0.2 | - | 2.5 | 3 | |
| E500' | 12 | 52.4 | 422 | 1269 | -1.4 | -7.6 | - | 7.9 | 3 | |
| | | Hz | kg | kg | g | g | g | g | | % |

Mittels einer Eingabedatei, die die Werte gemäß der Tabelle 6 enthält, werden die ausgewählten QSL-Vektoren der FE-Methode zugeführt und damit von dieser beim Durchführen einer statischen Analyse der Struktur berücksichtigt.

**Tabelle 6:** Eingabedatei

```
* * * * * * * * * * * * * * * * * * * * * * * * * * * * * * * * * * * *

*STEP

* * * * * * * * * * * * * * * * * * * * * * * * * * * * * * * * * * * *

*STATIC

* * * * * * * * * * * * * * * * * * * * * * * * * * * * * * * * * * * *

*DLOAD
E200,GRAV,10,3.1969,0.31007,9.2693
E300,GRAV,0.093442,1.6738,0.11998,9.6654
E400,GRAV,5.6947e-07,3.2439,3.5668,8.5435
E500,GRAV,4.9345e-07,9.2405,3.2863,0.22232
* * * * * * * * * * * * * * * * * * * * * * * * * * * * * * * * * * * *

*END STEP

* * * * * * * * * * * * * * * * * * * * * * * * * * * * * * * * * * * *
```

Die Figur 3c zeigt exemplarisch zwei visualisierte Ergebnisse der statischen Analyse bei den verschiedenen Frequenzen 23Hz bzw. 27Hz. Offenbart ist ein Verfahren zum Simulieren von Belastungen, denen mindestens eine Komponente E100, E200, E300, E400, E100', E200', E300', E400', E500' einer Struktur E, E' eines Luft- oder Raumfahrzeugs in dessen Betrieb ausgesetzt ist. Das Verfahren umfasst ein Durchführen einer statischen Analyse der Struktur durch Anwenden einer die Struktur E, E' repräsentierenden FE-Methode. Dabei werden QSL-Vektoren berücksichtigt, die aus Eigenmoden der mindestens einen Komponente E, E' berechnet werden.

Zudem offenbart sind ein Verfahren zum Evaluieren und ein Verfahren zum Herstellen jeweils einer mindestens eine Komponente E100, E200, E300, E400, E100', E200', E300', E500' umfassenden Struktur E, E' eines Luft- oder Raumfahrzeugs. Weiterhin offenbart ist ein Verfahren zum Modifizieren eines Luft- oder Raumfahrzeugs, das eine mindestens eine Komponente E100, E200, E300, E400, E100', E200', E300', E400', E500' umfassenden Struktur E, E' aufweist.

Bezugzeichen

E, E' Struktur
E0, E0' Ränder
E100, E200, E300, E400, E100', E200', E300', E400', E500' Komponente
S1 - S7 Verfahrensschritte

**Patentansprüche**

1.   Verfahren zum Simulieren von Belastungen, denen mindestens eine Komponente (E100, E200, E300, E400, E100', E200', E300', E400', E500') einer Struktur (E, E') eines Luft- oder Raumfahrzeugs in dessen Betrieb ausgesetzt ist, wobei das Verfahren ein Durchführen einer statischen Analyse der Struktur durch Anwenden einer die Struktur (E, E') repräsentierenden FE-Methode unter Berücksichtigung von QSL-Vektoren umfasst, die aus Eigenmoden der mindestens einen Komponente (E, E') berechnet werden.

2.   Verfahren gemäß Anspruch 1, wobei das Berechnen der QSL-Vektoren ein Bestimmen von modalen Massen und/oder Beteiligungsfaktoren jeweils aus einer zugehörigen der Eigenmoden und einem zugehörigen Starrkörper-Eigenvektor der mindestens einen Komponente (E100, E200, E300, E400, E100', E200', E300', E400', E500') in eine Verschiebungsrichtung umfasst.

3.   Verfahren gemäß einem der Ansprüche 1 oder 2, das ein Auswählen berechneter QSL-Vektoren zur Berücksichtigung in der FE-Methode umfasst, bei dem

    - QSL-Vektoren mit den größten auftretenden euklidischen Längen in einer vorbestimmten Anzahl ausgewählt werden und/oder
    - QSL-Vektoren mit den größten auftretenden euklidischen Längen in einer Anzahl ausgewählt werden, für die die Summe ihrer euklidischen Längen einen vorbestimmten Schwellwert eben überschreitet.

4.   Verfahren gemäß einem der vorhergehenden Ansprüche, wobei zu jedem der beim Simulieren berücksichtigen QSL-Vektoren zudem ein ihm entgegengesetzter Vektor gleicher Länge beim Anwenden der FE-Methode berücksichtigt wird.

5.   Verfahren gemäß einem der vorhergehenden Ansprüche, das ein numerisches Ausgeben und/oder ein Visualisieren eines Ergebnisses der FE-Methode auf einer Anzeigevorrichtung umfasst.

6.   Verfahren zum Evaluieren einer mindestens eine Komponente (E100, E200, E300, E400, E100', E200', E300', E400', E500') umfassenden Struktur (E, E') eines Luft- oder Raumfahrzeugs, wobei das Verfahren umfasst:

    - ein Simulieren von Belastungen, denen die Struktur (E, E') im Betrieb des Luft- oder Raumfahrzeugs ausgesetzt ist, mittels eines der vorhergehenden Verfahren; und
    - ein Auswerten eines aus dem Anwenden der FE-Methode resultierenden Ergebnisses.

7.   Verfahren zum Herstellen einer mindestens eine Komponente (E100, E200, E300, E400, E100', E200', E300', E400', E500') umfassenden Struktur (E, E') eines Luft- oder Raumfahrzeugs, wobei das Verfahren umfasst:

    - ein Simulieren von Belastungen, denen die in einem Konstruktionsmodell definierte Struktur im Betrieb des Luft- oder Raumfahrzeugs ausgesetzt ist, mittels eines der Verfahren gemäß den Ansprüchen 1 bis 5;
    - ein auf Grundlage eines Ergebnisses der angewandten FE-Methode erfolgendes Feststellen einer Eignung der gemäß dem Konstruktionsmodell ausgebildeten Struktur (E, E') zur Integration in das Luft- und Raumfahrzeug; und
    - ein Herstellen der Struktur (E, E') gemäß dem Konstruktionsmodell.

8.   Verfahren zum Modifizieren eines Luft- oder Raumfahrzeugs, das eine mindestens eine Komponente (E100, E200, E300, E400, E100', E200', E300', E400', E500') umfassende Struktur (E, E') aufweist, wobei das Verfahren umfasst:

- ein Simulieren von Belastungen, denen die Struktur (E, E') im Betrieb des Luft- oder Raumfahrzeugs ausgesetzt ist, mittels eines der Verfahren 1 bis 5; und
- ein auf Grundlage eines Ergebnisses der angewandten FE-Methode erfolgendes Ersetzen der Struktur (E, E') durch eine andere Struktur.

9. Verfahren gemäß Anspruch 8, wobei die andere Struktur von anderer Bauart als die erstgenannte Struktur ist und das Verfahren zudem

- ein Simulieren von Belastungen, denen die andere Struktur im Betrieb des Luft- oder Raumfahrzeugs ausgesetzt ist, mittels eines der Verfahren 1 bis 5 sowie
- ein Vergleichen jeweils erhaltener Simulationsergebnisse miteinander

umfasst.

Fig. 1:

```
┌─────────────┐
│     S1      │
└──────┬──────┘
       │
       ▼
┌─────────────┐
│     S2      │
└──────┬──────┘
       │
       ▼
┌─────────────┐
│     S3      │
└──────┬──────┘
       │
       ▼
┌─────────────┐
│     S4      │
└──────┬──────┘
       │
       ▼
┌─────────────┐
│     S5      │
└──────┬──────┘
       │
       ▼
┌─────────────┐
│     S6      │
└──────┬──────┘
       │
       ▼
┌─────────────┐
│     S7      │
└─────────────┘
```

Fig. 2a:

E300   E400        E0   E200   E0

E

E100

E0

Fig. 2b:

Frequenz

135.1
125.3
109.4
104.9
82.2
69.1
54.2
42.5
39.5
36.2

E200    E300    E400

10    20    30    40

Fig. 2c:

E300   E400   E200

E

E100

E0

E0

E100

E300   E400   E200

**Fig. 3a:**

**Fig. 3b:**

Frequenz

**Fig. 3c:**

Europäisches Patentamt
European Patent Office
Office européen des brevets

# EUROPÄISCHER RECHERCHENBERICHT

**Nummer der Anmeldung**

EP 24 18 4289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Allen Matthew S. ET AL: "Application of Quasi-Static Modal Analysis to an Orion Multi-Purpose Crew Vehicle Test : Proceedings of the 38th IMAC, A Conference and Exposition on Structural Dynamics 2020" In: "Sensors and Instrumentation, Aircraft/Aerospace, Energy Harvesting & Dynamic Environments Testing, Volume 7 : Proceedings of the 38th IMAC, A Conference and Exposition on Structural Dynamics 2020", 1. Januar 2021 (2021-01-01), Springer International Publishing, XP093228897, ISSN: 2191-5644 ISBN: 978-3-030-47713-4 Seiten 65-75, DOI: 10.1007/978-3-030-47713-4_8, Gefunden im Internet: URL:https://ntrs.nasa.gov/api/citations/20200002941/downloads/20200002941.pdf> * Zusammenfassung * * Seite 1, Absatz 1 - Seite 2, Absatz 4; Abbildungen 1,5-8 * ----- | 1-9 | INV. G06F30/15 G06F30/20 G06F30/23 |
| X | PARK KYUSIC ET AL: "Quasi-static modal analysis for reduced order modeling of geometrically nonlinear structures", JOURNAL OF SOUND AND VIBRATION, ELSEVIER, AMSTERDAM , NL, Bd. 502, 10. März 2021 (2021-03-10), XP086558778, ISSN: 0022-460X, DOI: 10.1016/J.JSV.2021.116076 [gefunden am 2021-03-10] * Seite 1 - Seite 6; Abbildung 1 * ----- -/-- | 1-9 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 29. November 2024 | Koblitz, Birger |

Europäisches Patentamt
European Patent Office
Office européen des brevets

## EUROPÄISCHER RECHERCHENBERICHT

Nummer der Anmeldung

EP 24 18 4289

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | FESTJENS HUGO ET AL: "A numerical tool for the design of assembled structures under dynamic loads", INTERNATIONAL JOURNAL OF MECHANICAL SCIENCES., Bd. 75, 1. Oktober 2013 (2013-10-01), Seiten 170-177, XP093228960, GB ISSN: 0020-7403, DOI: 10.1016/j.ijmecsci.2013.06.013 Gefunden im Internet: URL:https://pdf.sciencedirectassets.com/27 1483/1-s2.0-S0020740313X00098/1-s2.0-S0020 740313001860/main.pdf?hash=186345ba7ec3133 3eac84f9996d8e041f9000342717fff087222ec0a8 af4634e&host=68042c943591013ac2b2430a89b27 0f6af2c76d8dfd086a07176afe7c76c2c61&pii=S0 020740313001860&tid=spdf-2cb57aac-d560-488 7-bddf-8df> * das ganze Dokument * - - - - - | 1-9 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 29. November 2024 | Koblitz, Birger |